# EUROPEAN PATENT APPLICATION

(11) **EP 2 090 729 A2**
(43) Date of publication of application: **19.08.2009**
(21) Application number: 08020451.4
(22) Date of filing: 25.11.2008
(51) Int. Cl.: E05B 65/20, E05B 47/00

(54) **Door lock system**

(30) Priority: 18.02.2008 JP 2008036699
(71) Applicant: MITSUBISHI JIDOSHA KOGYO KABUSHIKI KAISHA, Tokyo (JP); Ansei Corporation, Obu-city Aichi (JP)
(72) Inventor: Uchikata, Toshiaki, Tokyo (JP); Arao, Tohru, Tokyo (JP); Uehara, Hiroki, Obu-shi Aichi (JP); Mori, Katsumi, Obu-shi Aichi (JP); Okuyama, Masaya, Obu-shi Aichi (JP)
(74) Representative: Vossius & Partner

(57) **Abstract**

A door lock system includes: a door that opens and closes a door opening portion formed in a vehicle body; a plurality of lock portions, each of which holds the door at a closing position by meshing a latch supported on the door with a striker fixed to an edge portion of the door opening portion; and latch drive means for switching each latch from a half-latching state to a full-latching state with respect to each striker opposing to each latch. The latch of at least one of the lock portions which is a first lock portion provided at one side is switched from the half-latching state to the full-latching state by displacing and swinging a swing operation member driven by a motor of the latch drive means in one direction, and the latch of one of the lock portions which is a second lock portion provided at the other side is switched from the half-latching state to the full-latching state by displacing and swinging the swing operation member in an opposite direction.

## Description

### BACKGROUND OF THE INVENTION

The present invention relates to a door lock system that opens and closes an access opening provided in the sidewall of a vehicle by a door.

Door opening and closing methods for opening and closing door openings of vehicles include a slide opening and closing method by a support unit with a slide mechanism. In most vehicles equipped with doors by the slide opening and closing method, the slide mechanism is provided in a side roof rail that forms an upper portion of the door opening portion or a side sill that forms a lower portion of the door opening portion and at a vertically center position of the rear end side of a sliding door for sliding the sliding door in the front and rear direction of the vehicle. However, when the slide mechanism is provided in the side roof rail or side sill, the side roof rail or side sill has a large section so that the height of the door opening portion is subject to a limitation and the amount of an overhang into a cabin is increased.
Therefore, as shown in Patent Document 1, a vehicle provided with a swinging/sliding door has been proposed, for which a sliding door is supported only at a central portion thereof so as to be freely slidable in the front and rear direction of the vehicle and no sliding mechanism is provided in the side roof rail or side sill.

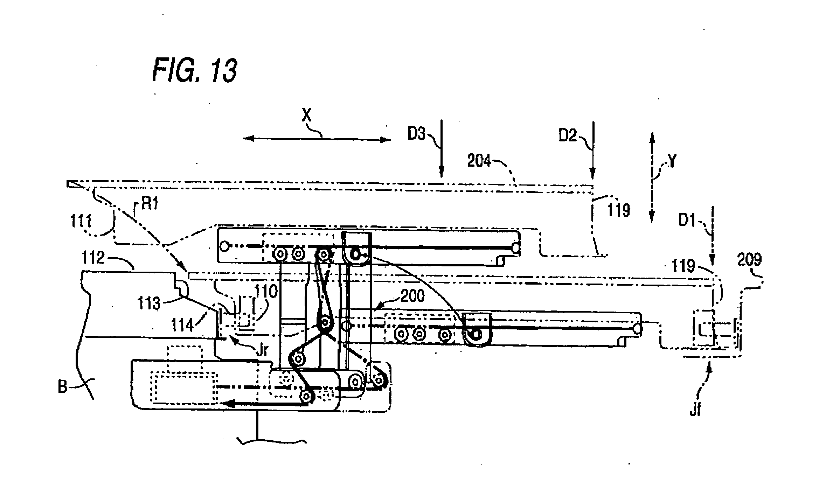

Meanwhile, when the door opening of a vehicle is maintained by a swinging/sliding door in a closed state, as shown in Fig. 13, a pair of upper and lower lock portions each composed of a latch 110 and a striker 114 are attached between a center pillar 209 and a front panel end of a rear door 204 and one lock portion thus composed is attached between a rear pillar 112 and a rear panel end of the rear door 204. Here, the swinging/sliding door 204 is moved by a door opening and closing system in a front and rear direction X of the vehicle. In this case, the swinging/sliding door 204 is displaced by swinging by parallel links 200 etc., to reach a closing position D1. At that time, each latch of lock portions Jf at the two front upper and lower points (only the upper point is shown in Fig. 13) and a rear lock portion Jr in the rear meshes with each striker to thereby lock the swinging/sliding door to the door opening.
Meanwhile, in the case of an electric swinging/sliding door, conventionally provided are two latches of one latch to interlock the lock portions Jf at two front upper and lower points of the rear door 204 and a latch of the rear lock portion Jr in the rear, and these are simultaneously made to perform a drawing operation, that is, switched from a half-latching state to a full-latching state to close up the door.
[Patent Document 1] Japanese Patent No. 2049752

As described above, in the case of a conventional electric swinging/sliding door, since two motors are necessary for a lock system, there has been a problem of an increase in weight and an increase in cost. Moreover, since motors of the latches provided one each in the front and rear are synchronized to perform a drawing operation, if there is a difference in drawing speed of the lock system, due to a different angle of approach of the latch to the striker different from a design value, this may have adversely affected the door closing performance.
Moreover, there has been a problem of a loud operating noise since the two motors simultaneously operate.
Moreover, although it is possible to use a single motor and simultaneously operate, by a unidirectional rotation thereof, two latches disposed at the front and rear of a door, a more powerful motor becomes necessary in that case, which causes an increase in cost and a deterioration in layout performance.

Moreover, when one latch has not been closed up even when the other latch has been closed up due to variance between the two latches disposed at the front and rear of a door, the motor continues to operate, so that an excessively large load may enter and damage the latch of the closed-up side.

### SUMMARY

It is therefore an object of the invention to provide a door lock system that sequentially operates two latches by one motor using a normal rotation and a reverse rotation of the motor to thereby allow a reduction in cost and a reduction in weight of the system.

In order to achieve the obj ect, according to the invention, there is provided a door lock system comprising:
a door that opens and closes a door opening portion formed in a vehicle body;
a plurality of lock portions, each of which holds the door at a closing position by meshing a latch supported on the door with a striker fixed to an edge portion of the door opening portion; and
latch drive means for switching each latch from a half-latching state to a full-latching state with respect to each striker opposing to each latch, wherein
the latch of at least one of the lock portions which is a first lock portion provided at one side is switched from the half-latching state to the full-latching state by displacing and swinging a swing operation member driven by a motor of the latch drive means in one direction, and the latch of one of the lock portions which is a second lock portion provided at the other side is switched from the half-latching state to the full-latching state by displacing and swinging the swing operation member in an opposite direction.

With this configuration,, a latch of a one-side lock portion is switched from a half-latching state to a full-latching state by displacing while swinging a swing operation member in one direction, and a latch of an other-side lock portion is switched from a half-latching state to a full-latching state by displacing while swinging the swing operation member in an opposite direction, that is, a normal rotation and a reverse rotation of a single motor are used to make a plurality of latches sequentially perform a locking operation in order, and thus the motor and the harnesses can be reduced in number to reduce the cost, the system can be reduced in weight, and the degree of freedom of layout in the door is improved, and usage of a single motor also allows a reduction in operating noise.

The first lock portion may include two upper and lower lock portions provided at the end portion of one side of the door opening portion so as to interlock with each other, and the second lock portion may be one lock portion provided at the end portion of the other side of the door opening portion.

In this case, the door can be reliably locked to a door opening portion by using two upper and lower lock portions at an opening edge portion of one side of the door opening portion and one lock portion at an opening edge portion of the other side, a total of three lock portions. Moreover, for the one-side lock portion, two upper and lower lock portions are provided at the opening edge portion so as to interlock with each other, it is not necessary to provide more motors, so that the cost can be reduced, the system can be reduced in weight, and the degree of freedom of layout in the door is improved.

The latch drive means may make the latch of the first lock portion perform a locking operation via a first swinging displacement transmitting member in accordance with displacing and swinging the swing operation member in the one direction by the motor, and make the latch of the second lock portion perform a locking operation via a second swinging displacement transmitting member in accordance with displacing and swinging the swing operation member in the opposite direction.

In this case, due to a swinging displacement in one direction being an outward direction of the swing operation member, the swinging displacement is transmitted via the one-side swinging displacement transmitting member to the latch of the one-side lock portions to cause a locking operation, and then, due to a swinging displacement in the other direction being a homeward direction, the swinging displacement is transmitted via the other-side swinging displacement transmitting member to the latch of the other-side lock portion to cause a locking operation, and thus a normal rotation and a reverse rotation of the single motor can be sequentially transmitted to the one-side lock portion and the other-side lock portion, so that the two latches can be reliably made to sequentially perform a locking operation.

The swing operation member may have a plate-like main portion that is reciprocatingly displaced by swinging in the one direction and the opposite direction around a rotational center axis by the motor, a coaxial cable which is the first swinging displacement transmitting member may be connected to the plate-like main portion at one end thereof and be connected to the latch of the first lock portion at the other end thereof so as to transmit a tension in a closing direction, and a pressing link which is the second swinging displacement transmitting member may be connected to the plate-like main portion at one end thereof and be separably in contact with the latch of the second lock portion at the other end thereof which is a swinging end so as to transmit a pressing force in the closing direction.

In this case, the latch of the one-side lock portion can be switched to a full-latching state by a tension of a coaxial cable connected to a plate-like main portion of the swing operation member, and next, the latch of the other-side lock portion can be switched to a full-latching state by a pressing force of a pressing link connected to the plate-like main portion, so that the two latches can be reliably made to sequentially perform a locking operation.

### BRIEF DESCRIPTION OF THE DRAWINGS

Fig. 1 is a schematic side view of a vehicle in which a door lock system is adopted as an embodiment of the present invention.
Fig. 2 is a view for schematically explaining a door lock configuration of a rear door to which the door lock system of Fig. 1 is applied.
Figs. 3A and 3B show a rear lock portion used in the door lock system of Fig. 1, wherein Fig. 3A is a main-part sectional view of the rear lock portion of a rear door, and Fig. 3B is a main-part enlarged sectional view of the rear lock portion.
Fig. 4 is a main-part sectional view of a front upper lock portion used in the door lock system of Fig. 1.
Figs. 5A, 5B and 5C are opening and closing operation explanatory views of a rear door used in the door lock system of Fig. 1.
Fig. 6 is a partial cutaway plan view of a swing and slide unit used for a rear door used in the door lock system of Fig. 1.
Figs. 7A and 7B are operation explanatory views of the door lock system of Fig. 1, wherein Fig. 7A is a view for explaining an unlocking operation of a rear door, and Fig. 7B is a view for explaining a locking operation.
Figs. 8A and 8B are operation explanatory views of a rear lock portion in the door lock system of Fig. 1, wherein Fig. 8A is a view for explaining a stationary state, and Fig. 8B is a view for explaining a locking operation of the rear lock portion thereof.
Figs. 9A and 9B are operation explanatory views of a rear lock portion in the door lock system of Fig. 1, wherein Fig. 9A is a view for explaining a locking operation of a front lock portion, and Fig. 9B is a rear view of Fig. 9A.
Figs. 10A and 10B are operation explanatory views of a rear lock portion in the door lock system of Fig. 1, wherein Fig. 10A is a view for explaining a stationary state of the rear lock portion, and Fig. 10B is a view for explaining a locking operation of the rear lock portion.
Fig. 11 is a locking operation explanatory view of a rear lock portion in the door lock system of Fig. 1.
Fig. 12 is an operation explanatory view showing a swinging operation of a swing and slide unit used for a rear door in which the door lock system of Fig. 1 is adopted.
Fig. 13 is a main-part cutaway plan view of a swing and slide unit of a conventional swinging/sliding door.

### DETAILED DESCRIPTION OF PREFERRED EMBODIMENTS

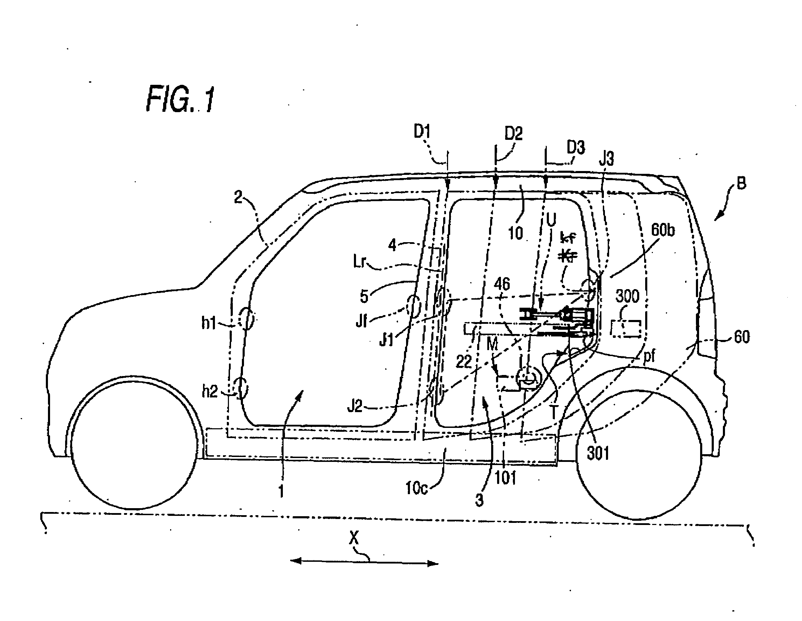

Fig. 1 shows a vehicle B to which a door lock system is applied as an embodiment of the present invention.
The vehicle B is a 4-door automobile with a center pillar 5, and includes a front door 2 that opens and closes each front access opening 1 on the left and right sides and a swinging/sliding door (hereinafter, simply described as a rear door) 4 that opens and closes each rear access opening 3 on the left and right sides.
Here, each front door 2 is hinge-connected at its two front-end upper and lower positions h1 and h2, and a rotational moving end is detachably locked to a rear lock portion Jf being at a vertically middle position of the center pillar 5 by use of an unillustrated latch and striker.

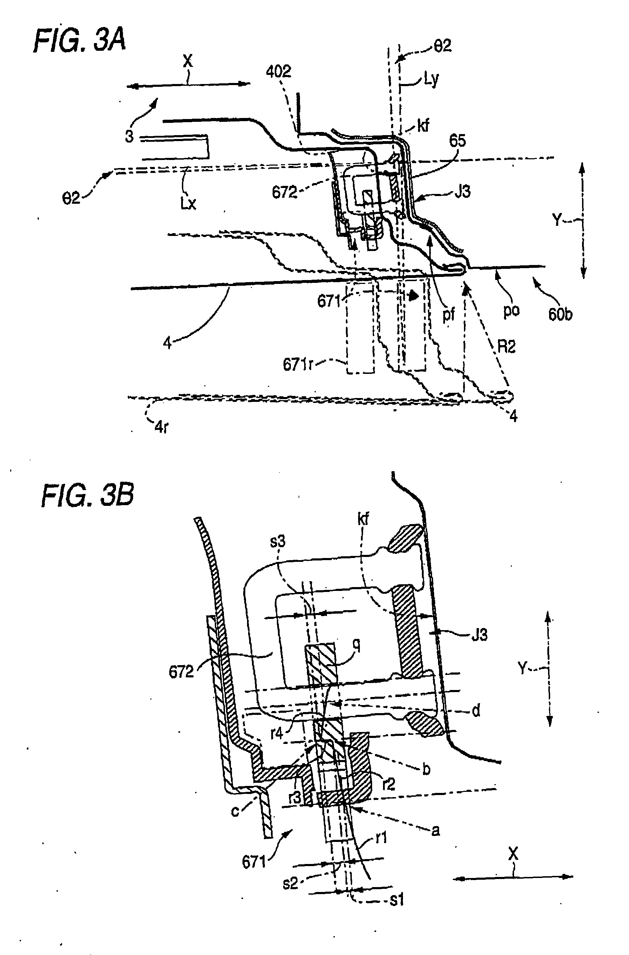

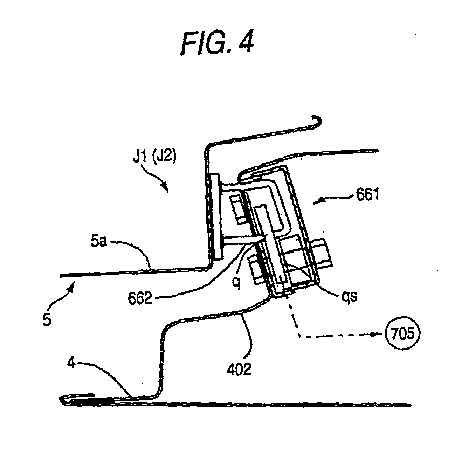

On the other hand, the rear door 4 is supported on a swing and slide unit U to be described later, and is slidably supported at a closing position D1 to close the rear access opening 3, a protruding position D2 protruded to the outside of the vehicle further than the closing position D1, and a full-opening position D3 slid rearward from the protruding position D2. At the closing position D1, front upper and lower lock portions J1 and J2 forming one-side lock portions of the rear door 4 are detachably locked to the center pillar 5 at two positions by use of a latch 661 and a striker 662 shown in Fig. 4, and a rear lock portion J3 forming an other-side lock portion being a remaining lock portion is detachably locked to a rear pillar 60b by use of a latch 671 and a striker 672 shown in Figs. 3A and 3B.

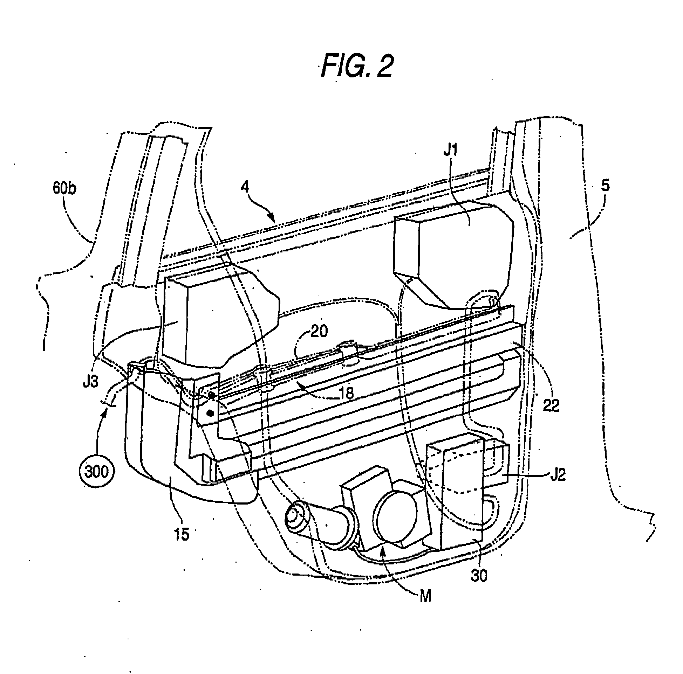

As shown in Figs. 1 and 2, the front upper lock portion J1 is located at the front side, which is a closing direction of the rear access opening 3, and arranged close to the center pillar 5 that connects a roof side rail 10 and a side sill 10c forming an upper portion and a lower portion of the rear access opening 3, here, at an upper portion of the center pillar 5. The rear lock portion J3 is arranged at a vertically middle position of the rear pillar 60b located at the rear side of a vehicle body in the rear access opening 3, and the front lower lock portion J2 is arranged close to the center pillar 5, here, at a lower portion of the center pillar 5. In other words, the front upper lock portion J1 and the rear lock portion J3 are arranged above a door supporting rail 22 to be described later of the swing and slide unit U, and the front lower lock portion J2 is arranged below the door supporting rail 22.

The rear door 4 held at the door closing position D1 is locked to the center pillar 5 by use of the latch 661 and the striker 662 forming the front upper lock portion J1 (the front lower lock portion J2 is also similarly constructed), and locked to the rear pillar 60b by use of the latch 671 and the striker 672 forming the rear lock portion J3, and these lock portions J1, J2, and J3 are, as shown in Fig. 1, arranged on a peripheral portion of the rear access opening 3 so as to form a triangular shape with each other. Also, as shown in Fig. 4 and Fig. 3A, each striker 662 of the front upper, front lower lock portion J1, J2 is fixed to an outer panel 5a of the center pillar 5 by fastening with a bolt (not shown), and the striker 672 of the rear lock portion J3 is fixed to the rear pillar 60b by fastening with a bolt (not shown).

The latch 661 of the front upper, front lower lock portion J1, J2 and the latch 671 of the rear lock portion J3 are respectively fixed to an inner panel 402 of the rear door 4 that faces the striker 662, 672 of each lock portion.
Also, an outer marginal portion of the rear door 4 is attached with an unillustrated weather strip, and the weather strip allows, when the rear door 4 is held at the closing position D1, closely press-contacting against the entire periphery of a marginal wall face of the rear access portion 3 as a result of receiving an operation of the lock portions J1, J2, and J3 disposed in a triangular shape, and thereby securing sealability.
As shown in Fig. 3A, the striker 672 of the rear lock portion J3 attached to the rear door 4 is supported on an attaching face kf formed at a middle portion in the vertical direction of a forward facing wall pf (see Fig. 1) of the rear pillar 60b.

Aback face of the forward facing wall pf of the rear pillar 60b is integrally joined with a pillar reinforcement 65. This allows the pillar reinforcement 65 to reinforce the attaching face kf.

Here, the latch 671 of the rear lock portion J3, as will be described later with Fig. 3A, moves to the U-shaped striker 672 along a trajectory R1 from the outside to the inside of the vehicle and meshes with a near-side shaft portion of the striker 672. In this case, the rear door 4 is, in moving to the closing direction D1 thereof, approximated at its front-side longitudinal edge portion to the center pillar 5 by parallel links 16 to be described later, and as a result of receiving a lock signal from a controller 30 (see Fig. 2) to be described later, the front upper lock portion J1 and the front lower lock portion J2 are switched from a half-latching state to a full-latching state. Thereby, around a pivot support line Lr (see Fig. 1) that connects meshing points of the front upper lock portion J1 being the one-side lock portion and the rear lock portion J3 and integrally with a rear end side of the rear door 4, rotationally displaced to the inside of the vehicle is the rear lock portion J3 being the other-side lock portion.

Concretely, for a trajectory of the latch 671 of the rear lock portion J3, as shown in Figs. 3A and 3B, the rear door 4 proceeds to an unlatching position "a" along a trajectory of an arc r1 at the time of swinging of the parallel links 16, and follows a trajectory of r2 until reaching a half-latching position "b" through the same portion, and a fork portion q of the latch 671 starts to move. Here, the shift amount of the striker 672 in the axial direction is s1.
Further, at a half-latching position p1, the front upper lock portion J1 and the front lower lock portion J2 at the front-side edge portion of the rear door 4 are simultaneously switched to a full-latching state to cause a forward drawing movement, and follow a trajectory of r3. Here, the shift amount of the striker 672 in the axial direction is s2, which is the same as r3.

Next, the rear lock portion J3 on the rear end side of the rear door 4 proceeds to a full-latching state following a trajectory of r4 to be rotationally displaced to the inside of the vehicle around the pivot support line Lr. Continuously, the rear lock portion J3 follows a trajectory of r5 where the fork portion q of the latch 671 proceeds to an overrun position "e" (slipping of the fork portion q) beyond a full-latching position "d" in order to mesh with the striker 672, and then returns to the full-latching position "d" to stop. Here, the shift amount of the striker 672 in the axial direction is s3.
Therefore, in consideration of such trajectories, in order to set the setting angle of the striker 672 and the direction of the latch 671 meshing with the striker 672 so that S (=s1+s2+s3) being a total amount of relative frictions becomes smaller, here, the striker 672 and the fork portion q of the latch 671 are set so as to secure an almost orthogonal state at the closing position D1, so that meshing with the latch 671 can be smoothly performed.

Also, according to the circumstances, it is assumed, as partially shown by alternate long and two short dashed lines in Fig. 3A, that a hinge door 4r is used in place of the swinging/sliding door 4. In this case, the hinge door 4r is pivotally attached to the center pillar 5 so that an unillustrated pivot support axis that connects upper and lower hinges (not shown) at a front-side edge portion of the hinge door 4r is coincident with the pivot support line Lr set for the above-described front upper lock portion J1 and front lower lock portion J2, then, the rear lock portion J3 for the rear door 4 is attached to a rear end side of the hinge door 4r, and the striker 672 is attached to the attaching face kf of the rear pillar 60b. Even when the hinge door 4r is then moved along a trajectory R1' from the outside to the inside of the vehicle, the hinge door 4r easily reaches the closing position D1 and can thus be held in a full-latching state. Thus using the rear lock portion J3 and the striker 672 together allows easily adopting the hinge door 4r in place of the swinging/sliding door 4.

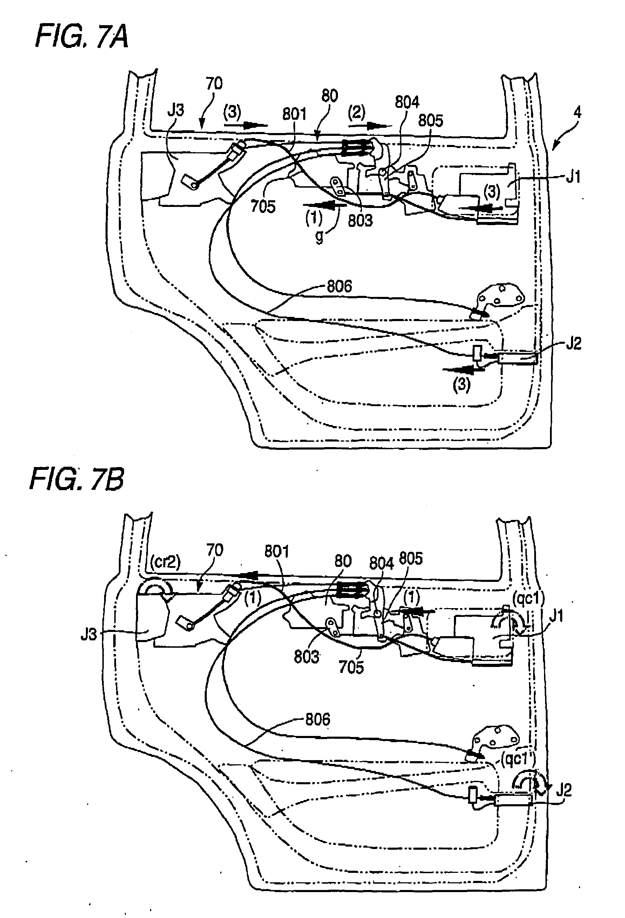

Meanwhile, as shown in Figs. 7A and 7B, disposed in the rear door 4 is latch meshing drive means 70 serving as latch drive means and latch releasing drive means 80 for switching each latch of the front upper and front lower lock portions J1 and J2 being one-side lock portions and the rear lock portion J3 being an other-side lock portion from a half-latching state to a full-latching state (each operation of qcr1, qcr1', and cr2 of Fig. 7B) with respect to the opposing striker 662, 672 (see Fig. 3A and Fig. 4).

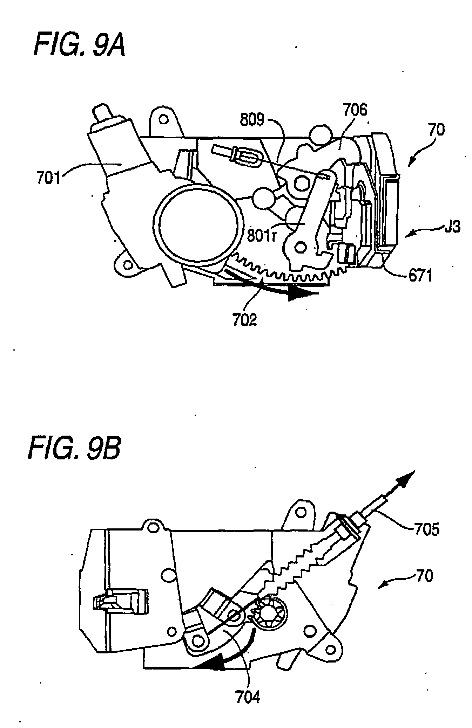

As shown in Figs. 7A to 11, the latch meshing drive means 70 includes a motor 701 to serve as a drive source and a swing operation member 702 to be driven by the motor.

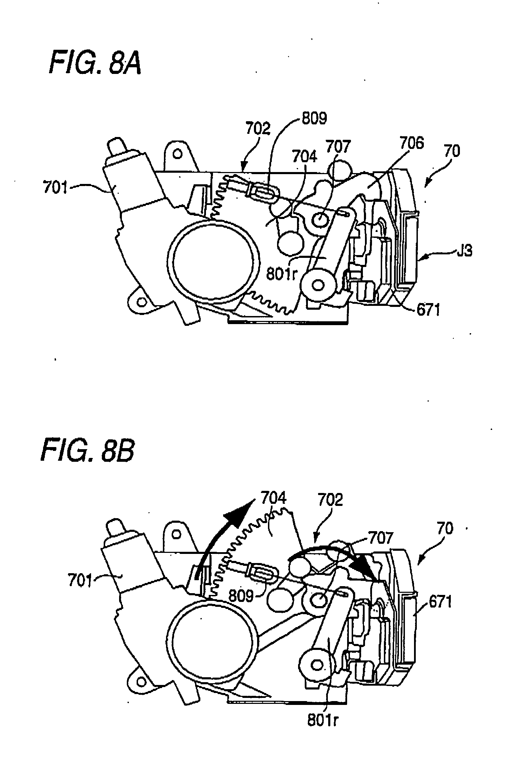

As shown in Figs. 8A to 11, the latch swing operation member 702 is composed of a pinion gear at the motor 701 side and a plate-like main portion 704 provided with a curved rack gear meshed therewith and reciprocatingly displaced by swinging in one direction and the other direction around a rotational center axis. This is formed so as to transmit the other end of a coaxial cable 705 whose one end is connected to the plate-like main portion 704 to the latch 661 (see Fig. 4) of the front upper lock portion J1 (one-side lock portion) as a tension in the closing direction.
Furthermore, as shown in Figs. 8A and 8B, the other-end side of the plate-like main portion 704 is pin-connected with a pivot 707 (see Figs. 8A and 8B) to serve as a fulcrum of a pressing link 706 being a swinging displacement transmitting member, and a swinging end thereof is formed to abut against the latch 671 of the rear lock portion J3 (other-side lock portion) so as to be able to contact therewith and separate therefrom and transmit a pressing force in the closing direction.

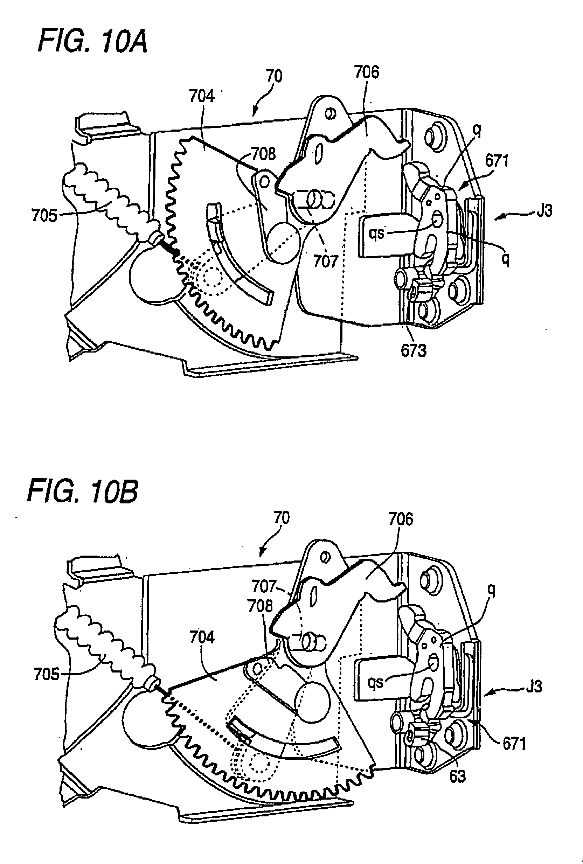

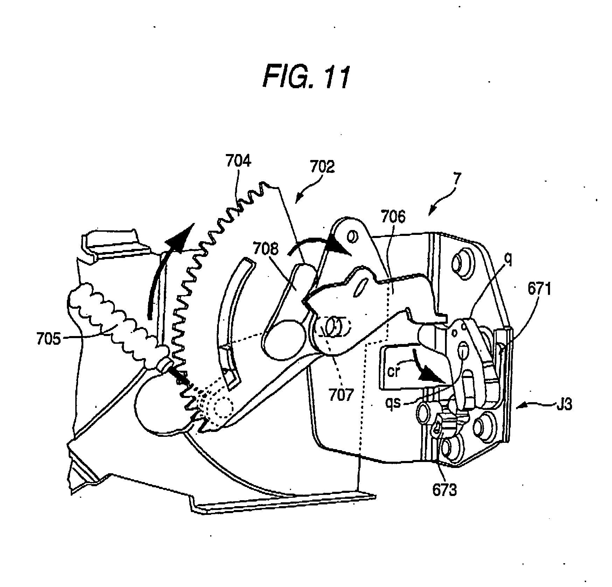

Here, as shown in Figs. 10A, 10B and 11, the pressing link 706 is pivotally supported at its fulcrum so as to be relatively displaceable coaxially with the pivot 707 of the plate-like main portion 704, and in the vicinity thereof, a claw portion of an engaging piece 708 whose one end is pin-connected to the plate-like main portion 704 is engaged with the pressing link 706 to exert a rotating force of the plate-like main portion 704 to the pressing link 706, and as a result of the pressing link 706 rotationally moving around the pivot 707 according thereto, the swinging end of the pressing link 706 exerts a pressing force in the meshing direction to the latch 661.
As shown in Figs. 3A and 3B, the fork portion q of the latch 671 that has received a pressing force in the meshing direction rotationally moves around a latch shaft qs to mesh with the opposing striker 672, and in accordance with meshing equal to or more than a predetermined amount, an unillustrated detent claw is engaged to maintain the meshing state of the striker 672.

Also, as shown in Figs. 8A and 8B, the unillustrated detent claw is capable of executing a disengaging operation of a releasing operation force of a releasing cable 809 at the latch releasing drive means 80 via a link 801r. On the other hand, the detent claw is formed so as to transmit the releasing operation force to the latch 661 of the front upper lock portion J1 (one-side lock portion) as a tension in the closing direction.
More specifically, the fork portion q in the latch 661 of the front upper lock portion J1 is pivotally supported on an unillustrated latch shaft, an arm end at the other end side of the fork portion q is connected with a coaxial cable 705, and the fork portion q rotationally moves around the meshing according to a tension from the coaxial cable 705, meshes and engages with the opposing striker 662, and maintains a meshing state with the striker 662.

As shown in Figs. 7A and 7B, the latch releasing drive means 80 includes a releasing arm 803 that causes a swinging displacement of reference numeral (1) in conjunction with an unillustrated actuator and a branching operation member 805 for leverage denoted by reference numeral (2) around a fulcrum pin 804 in conjunction with the releasing arm 803. The latch releasing drive means 80 further includes an unillustrated detent claw in the latch 661 of the front upper lock portion J1 connected via a coaxial cable for transmitting a tension denoted by reference numeral (3) to one swinging end of the branching operation member 805, an unillustrated detent claw in the latch 661 (same as with the front upper lock portion J1) of the front lower lock portion J2 connected via a coaxial cable 806 for transmitting a tension denoted by reference numeral (3) to the other swinging end of the branching operation member 805, and an unillustrated detent claw of the rear lock portion J3 connected via a coaxial cable 801 for transmitting a tension denoted by reference numeral (3) to the other swinging end of the branching operation member 805.

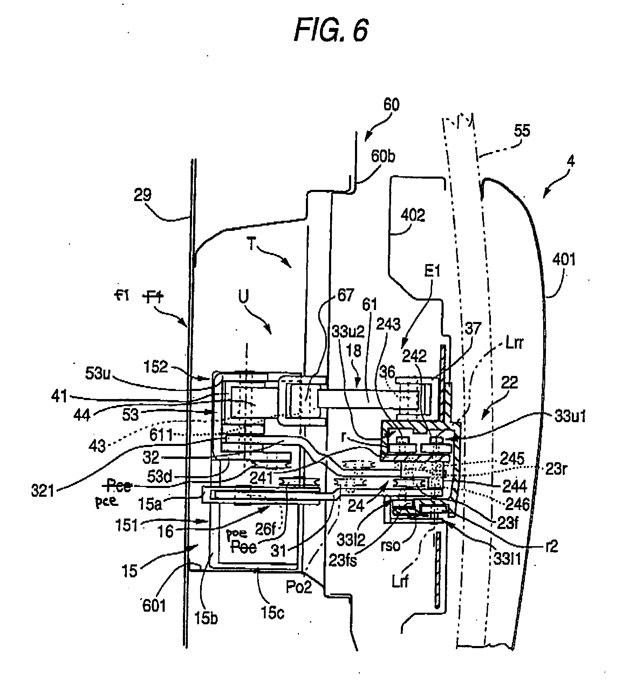

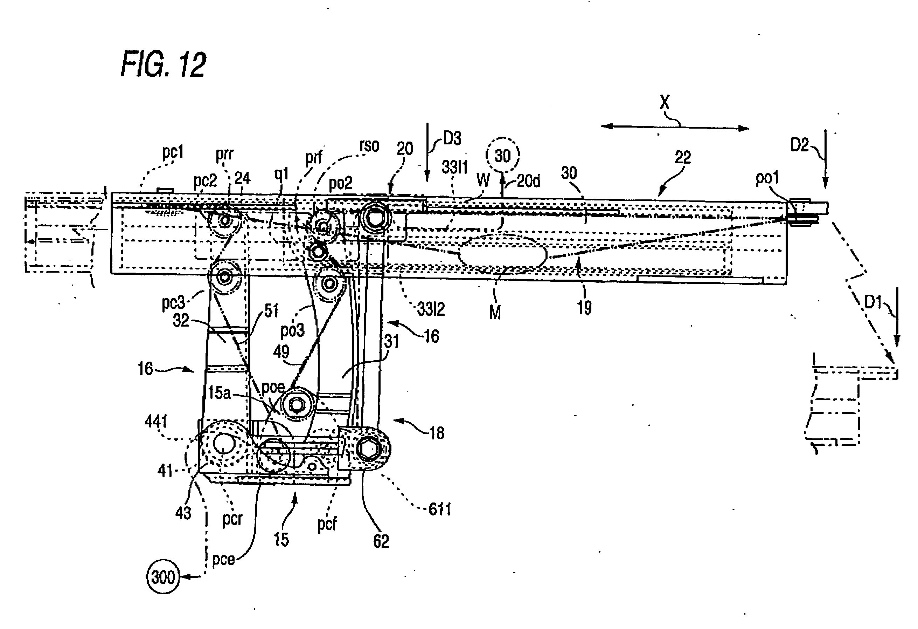

The latch releasing drive means 80 rotationally moves the branching operation member 805 around the fulcrum pin 804 in response to an unlocking command from the controller 30 (control means) as shown in Fig. 2 to cause a swing operation from a steady position to a releasing position (an operation denoted by reference sign "g" shown in Fig. 7A), and simultaneously releases, in conjunction therewith, the unillustrated detent claws of the front upper and lower lock portions J1 and J2 and the rear lock portion J3, and releases the rear door 4 from the closing position D1 to allow swinging toward the protruding portion D2.
As shown in Figs. 1, 4, and 5A to 5C, the swing and slide unit U that forms the main portion of a door opening and closing system of the rear door 4 is attached to an attaching recess portion T formed in the vicinity of a middle portion in the vertical direction of the rear pillar 60b disposed along the rear access opening 3 of the vehicle body.
As shown in Figs. 6 and 12, a base member 15 being a base portion of the swing and slide unit U forms a fixing member of a sidewall of the vehicle body, to which attached is a base end portion of the parallel links 16, a base end portion of a door load supporting arm 18, a vehicle body-side wiring portion 20b of a wire harness 20 supported on the door load supporting arm 18 (see Fig. 4), cable ends poe and pce of an opening and closing drive mechanism 19, etc.

As shown in Figs. 6 and 12, the base member 15 has a shape that maintains rigidity, and includes a lower attaching portion 151 that pivotally supports a pair of front and rear parallel links 16 and an upper vertical column portion 152 that extends upward further than the lower attaching portion 151 and pivotally supports the door load supporting arm 18. The lower attaching portion 151 includes a transverse flange portion 15a that pivotally supports the pair of parallel links 16, a downward slope portion 15b that is attached by welding so as to reinforce the transverse flange portion 15a and obliquely extends downward, and a fastening flange 15c that is extended in a bent manner from the lower slope portion 15b and bolted onto the attaching recess portion T.
The upper vertical column portion 152 includes a base-end boss portion 41 where the first pivot support end (base end) of a first support arm 44 of the door load supporting arm 18 is pivotally supported via a vertical pin 43.
A laid U-shaped fastening bracket 53 is overlaid at one side of the base-end boss portion 41, and these are bolted to each other.

As shown in Figs. 4, 5A to 5C, 10A and 10B, the parallel links 16 have a function of positioning a moving trajectory and respective positions of the swinging rear door 4. Front and rear connecting pins 246 and 245 of a front arm 31 and a rear arm 32 of the parallel links 16 are pin-connected with the vicinities of front and rear ends of a slider 24, respectively. The front arm 31 and the rear arm 32 mutually hold a predetermined interval in the front and rear and vertically, whereby both arms are to be prevented from interfering with each other.
As shown in Fig. 4, an outer panel 401 of the rear door 4 and an inner panel 402 disposed with a door interior space interposed are mutually integrally joined at outer marginal portions of each other' s front and rear and lower portions, and an opening is formed between upper marginal portions of both panels, where a sash 55 being a supporting member of an unillustrated door glass is mounted.

In the interior space of the rear door 4, disposed beside the door glass is a door supporting rail 22, the slider 24 attached by fitting to the door supporting rail 22, a door-side member of the opening and closing drive mechanism 19, and the controller 30 (see Fig. 1) serving as control means being electric equipment provided in the rear door 4.

As shown in Figs. 1, 5A to 5C, and 12, a motor 101 that forms a drive source M and a wind-up drum 46 of the opening and a closing drive mechanism 19 and a plurality of intermediate rollers Po2 and Pc2 are disposed on the rear door 4 side. The electric equipment in the rear door 4 is connected to a main controller 300 on the vehicle body side through the wire harness 20 supported on the door load supporting arm 18.
As shown in Figs. 4 and 12, for the door load supporting arm 18 attached above the parallel links 16, a first pivot support end (base end) 441 of the first support arm 44 is pivotally supported via the first vertical pin 43 on the base-end boss portion 41 formed in the upper vertical column portion 152, which is an upper portion of the base member 15 pivotally supported on the vehicle body side. On a rotational moving end of the first support arm 44, a second pivot support end (base end portion) 611 of a second support arm 61 is pivotally supported via a second vertical pin 62, and a swinging end 612 of the second support arm 61 being the other end thereof pivotally supports a door-side pivot support portion 37 in the vicinity of a center of gravity position of the rear door 4 via a third vertical pin 36. The door load supporting arm 18 thus constructed allows constantly transmitting a load of the center of gravity portion of the rear door 4 to the base member 15.

Meanwhile, as shown in Figs. 6 and 12, the slider 24 pivotally attached to the swinging end of the parallel links 16 is attached by fitting to the door supporting rail 22. The door supporting rail 22 is fixedly attached to the inner panel 402 of the rear door 4 via an attaching bracket 35. The door supporting rail 22 is formed inside with downward-facing main and subordinate rail grooves 33u1 and 33u2 and, underneath, a downward-facing main rail groove 3311 and an upward-facing subordinate rail groove 3312 formed long in the front and rear direction X, and the slider 24 is fitted by insertion inside the door supporting rail 22 via front and rear rollers 23f and 23r and a plurality of rollers r.
The slider 24 includes the rear connecting pin 245 that swingably pin-connects the swinging end of the rear arm 32 and the front connecting pin 246 that extends downward further than a forward downward-facing wall of a lower base plate 241b and swingably pin-connects the swinging end of the front arm 31. Thereby, the slider 24 is swung by the parallel links 16, and the door supporting rail 22 can easily slide in the front and rear direction X with respect to the front and rear rollers 23f and 23r of the slider 24.

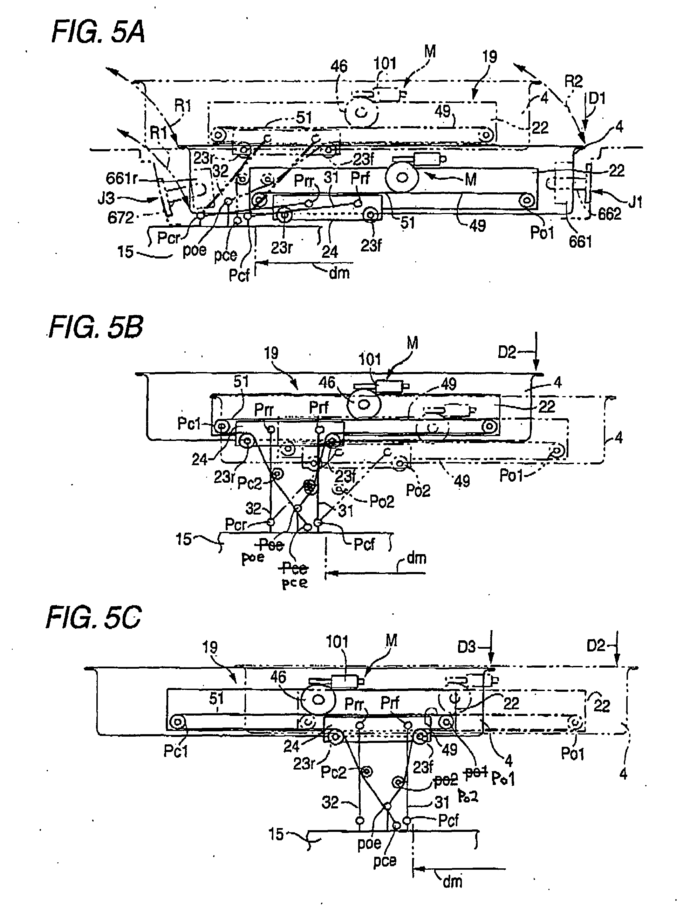

Also, the front roller 23f abuts against a stopper wall portion rs0 of the downward-facing main rail groove 3311 in the lower portion to thereby prevent the door supporting rail 22 (rear door 4) from relatively making a further forward sliding movement, and control the protruding position D2 of the door supporting rail 22 (rear door 4).
Next, the rear door 4 is disposed with the opening and closing drive mechanism 19.
As shown in Figs. 5A to 5C and 12, the opening and closing drive mechanism 19 has a function of moving the rear door 4 from the closing position D1 to the full-opening position D3 via the protruding position D2 by a rotating force of the motor 101 that forms a drive source and the wind-up drum 46.

More specifically, the opening and closing drive mechanism 19 includes the motor 101 disposed inside the rear door 4, the wind-up drum 46 driven by the motor 101 so as to be capable of winding up and unwinding, an opening cable 49 and a closing cable 51 wound up by the wind-up drum 46 so as to be freely drawn out, an end pulley po1 at the front end of the door supporting rail 22 on which the opening cable 49 is wound, an end pulley pc1 at the rear end of the door supporting rail 22 on which the closing cable 51 is wound, a first pulley po2 on the front side of the slider 24, a second pulley po3 (front middle pulley) on the front arm 31, the cable end poe supported on the transverse flange portion 15a and connected with an anchor portion of the opening cable 49, a first pulley pc2 on the rear side of the slider 24, a second pulley pc3 (rear middle pulley) on the rear arm 32, and the cable end pce supported on a lower flange 53d of the laid U-shaped fastening bracket 53 and connected with an anchor portion of the closing cable 51.

Next, operations of the rear door 4 will be described.
Before the controller 30 receives a door opening command, the rear door 4 is held at the closing position D1 (see Fig. 1 and Fig. 5A).
At this time, each latch 661, 671 of the front upper lock portion J1, the front lower lock portion J2, and the rear lock portion J3 on the rear door (swinging/sliding door) 4 side is maintained in a non-conductive state while maintaining a locking state. More specifically, the rear door 4 is locked to the center pillar 5 by use of the latch 661 and the striker 662 of the front upper lock portion J1 (same as with the front lower lock portion J2). Furthermore, the latch 671 of the rear lock portion J3 for the swinging/sliding door is meshed with the striker 672. In this case, as shown in Fig. 5A, the swinging ends of the rear arm 32 and the front arm 31 are drawn to the inside of the vehicle, and the door supporting rail 22 as well as the slider 24 at the swinging ends of both arms maintain the rear door 4 in a state held at the closing position (see Fig. 1) D1.

Next, when the controller 30 receives a door opening command and an, unlocking command is issued by the controller 30, the branching operation member 805 swings from the steady position to the releasing position to make, in conjunction therewith, the front upper and lower lock portions J1 and J2 and the rear lock portion J3 simultaneously perform a releasing operation and release the rear door 4 from the closing position D1 so as to allow swinging toward the protruding position D2. Thereby, each latch 661, 671 of the front upper lock portion J1, the front lower lock portion J2, and the rear lock portion J3 is released, and separated from each striker 662, 672.
Then, the plate-like main portion 704 that is reciprocatingly displaced by swinging as a result of the motor 101 of the drive source M being driven winds up, as shown by alternate long and short two dashed lines shown in Fig. 5A, a cable provided in a tensioned state between the cable end poe connected with an anchor portion of the opening operation cable 49 and the fixed pulley po1 on the door supporting rail 22 by an unillustrated opening wind-up portion of the wind-up drum 46. Thereby, the front arm 31 and the rear arm 32 in conjunction therewith are displaced by swinging from the closing position D1 to the swinging position D2 shown in Fig. 5B.

Next, due to action of the opening and closing drive mechanism 19, the rear door 4 passes through the swinging position D2 to cause, relative to the slider 24 at the swinging end of the parallel links 16 whose swinging has stopped, a sliding operation of the door supporting rail 22 side up to the full-opening position D3 shown in Fig. 5C.
Next, it is assumed that a passenger has passed through the rear access opening 3 and finished getting in and out and the controller 30 receives a door closing command. At this time, the drive source motor 101 is driven for normal rotation to return the rear door 4 in the state of Fig. 5C to the swinging position D2 shown in Fig. 5B, and the rear door 4 moves toward the closing position D1 of Fig. 5A.

The controller 30 that has received a signal to the effect that the latch 661 of the front upper lock portion J1 (same as with the front lower lock portion J2) is at a half-latching position immediately before the closing position D1 normally rotates the motor 101 to sway the plate-like main portion 704 in one direction (a displacement from Fig. 10A toward Fig. 10B), and in conjunction therewith as shown in Fig. 4, the latch 661 of the front upper lock portion J1 (same as with the front lower lock portion J2) of the rear door 4 meshes with the striker 662 supported on the center pillar 5, and is locked.
Then, the controller 30, when having received a signal to the effect that the latch 671 of the rear lock portion J3 is at a half-latching position, reversely rotates the motor 101 to sway the plate-like main portion 704 in the other direction. In conjunction therewith, the latch 671 of the rear lock portion J3 rotationally moves, as shown in Fig. 11, in a meshing direction cr to mesh with the striker 672 (see Fig. 5A).

At this time, as shown in Fig. 3B, the latch 671 of the rear lock portion J3 follows the trajectory of r1 along an arc at the time of swinging of the parallel links 16, and reaches the half-latching position "b" through the unlatching position "a," and further, the fork portion q starts to move. Here, the front upper lock portion J1 and front lower lock portion J2 of the rear door 4 are switched to a full-latching state to make a forward drawing movement according thereto, and follow the trajectory of r3. Then, the rear lock portion J3 passes through the trajectory of r4 to be rotationally displaced to the inside of the vehicle around the pivot support line Lr, and stops at the full-latching position "d" through a trajectory of r5 where the fork portion q of the latch 671 proceeds to the overrun position "e" beyond the full-latching position "d" in order to mesh with the striker 672 and then returns, so that the rear lock portion J3 is maintained in the full-latching state.

In meshing to the full-latching state, as described above, a total amount of relative frictions S (=s1+s2+s3) is relatively small, so that the latch 671 of the rear lock portion J3 can smoothly perform a meshing operation.

As such, a normal rotation and a reverse rotation of the single motor 701 are used to make the two interlocking lock portions of the front upper lock portion J1 (the front lower lock portion J2 is also similarly constructed) and the other rear lock portion J3 sequentially perform a locking operation in order, and thus the motor 701 and the harnesses can be reduced in number to reduce the cost, and the system can be reduced in weight. Moreover, the degree of freedom of layout in the rear door 4 is improved, and usage of a single motor also allows a reduction in operating noise.

Here, the front upper lock portion J1 and the front lower lock portion J2 can be interlocked, and the door can be reliably locked to a door opening portion by using two upper and lower lock portions J1 and J2 at an opening edge portion of one side of the door opening portion and one lock portion J3 at an opening edge portion of the other side, a total of three lock portions. Moreover, it is not necessary to provide more motors.
Further, due to a swinging displacement in one direction being an outward direction of the plate-like main portion (swing operation member) 704, the swinging displacement is transmitted via the one-side coaxial cable (swinging displacement transmitting member) to the latch of the front lock portion J1, J2 to cause a locking operation, and then, due to a swinging displacement in the rear direction being a homeward direction, the swinging displacement is transmitted via the rear-side pressing link 706 (swinging displacement transmitting member) to the latch of the rear lock portion J3 to cause a locking operation, and thus a normal rotation and a reverse rotation of the single motor 701 can be sequentially transmitted to the one-side lock portion and the other-side lock portion, so that the two latches can be reliably made to sequentially perform a locking operation.
In the foregoing, although a description has been given for a case that the present invention is applied to the rear door 4, the present invention can also be similarly applied to left and right doors etc., of a two-door vehicle, and the same operations and effects can be obtained.

## Claims

1. A door lock system comprising:
a door that opens and closes a door opening portion formed in a vehicle body;
a plurality of lock portions, each of which holds the door at a closing position by meshing a latch supported on the door with a striker fixed to an edge portion of the door opening portion; and
latch drive means for switching each latch from a half-latching state to a full-latching state with respect to each striker opposing to each latch, wherein
the latch of at least one of the lock portions which is a first lock portion provided at one side is switched from the half-latching state to the full-latching state by displacing and swinging a swing operation member driven by a motor of the latch drive means in one direction, and the latch of one of the lock portions which is a second lock portion provided at the other side is switched from the half-latching state to the full-latching state by displacing and swinging the swing operation member in an opposite direction.

2. The door lock system according to Claim 1, wherein
the first lock portion includes two upper and lower lock portions provided at the end portion of one side of the door opening portion so as to interlock with each other, and the second lock portion is one lock portion provided at the end portion of the other side of the door opening portion.

3. The door lock system according to Claim 1 or 2, wherein
the latch drive means makes the latch of the first lock portion perform a locking operation via a first swinging displacement transmitting member in accordance with displacing and swinging the swing operation member in the one direction by the motor, and makes the latch of the second lock portion perform a locking operation via a second swinging displacement transmitting member in accordance with displacing and swinging the swing operation member in the opposite direction.

4. The door lock system according to Claim 3, wherein
the swing operation member has a plate-like main portion that is reciprocatingly displaced by swinging in the one direction and the opposite direction around a rotational center axis by the motor, a coaxial cable which is the first swinging displacement transmitting member is connected to the plate-like main portion at one end thereof and is connected to the latch of the first lock portion at the other end thereof so as to transmit a tension in a closing direction, and a pressing link which is the second swinging displacement transmitting member is connected to the plate-like main portion at one end thereof and is separably in contact with the latch of the second lock portion at the other end thereof which is a swinging end so as to transmit a pressing force in the closing direction.
